(19) Europäisches Patentamt / European Patent Office / Office européen des brevets

(11) **EP 4 682 744 A1**

(12) **EUROPEAN PATENT APPLICATION**
published in accordance with Art. 153(4) EPC

(43) Date of publication:
**21.01.2026 Bulletin 2026/04**

(21) Application number: **23927898.9**

(22) Date of filing: **17.03.2023**

(51) International Patent Classification (IPC):
*G06F 17/14* (2006.01)    *G06F 17/11* (2006.01)
*G21C 17/104* (2006.01)

(52) Cooperative Patent Classification (CPC):
**G06F 17/11; G06F 17/14; G21C 17/104**

(86) International application number:
**PCT/CN2023/082262**

(87) International publication number:
**WO 2024/192579 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Liu, Changyuan**
**Shenyang, Liaoning 110021 (CN)**

(72) Inventor: **Liu, Changyuan**
**Shenyang, Liaoning 110021 (CN)**

(74) Representative: **Herzog IP Patentanwalts GmbH**
**Steinstraße 16-18**
**40212 Düsseldorf (DE)**

(54) **METHOD AND APPARATUS FOR CALCULATING NEUTRON FLUX, AND ELECTRONIC DEVICE**

(57)    This application discloses a method for calculating neutron flux, which includes the following steps: calculating a first objective function using a kernel density estimation method and a sampling method; obtaining a kernel function using the inner product of random Fourier feature vectors; deriving a second objective function based on the first objective function and the kernel function; calculating the average Fourier feature vector of neutron flux; computing a third objective function based on the second objective function and the average Fourier feature vector of neutron flux; within a spatial subset, calculating the average Fourier feature vector of the neutron flux; and determining a fourth objective function based on the average Fourier feature vector of the neutron flux calculated within the spatial subset and the third objective function; among these, the first objective function, the second objective function, the third objective function, and the fourth objective function are functional expressions used to calculate the neutron flux of a device where nuclear reactions occur. The method for calculating neutron flux proposed in this application can improve the data processing efficiency in the neutron flux calculation process.

Fig.1

**Description**

**Technical Field**

The present application relates to the field of nuclear reactor technology, and particularly to a method for calculating neutron flux.

**Background Art**

In this field, sampling methods, including Monte Carlo methods, are commonly used to achieve high-fidelity simulations of devices where nuclear reactions occur and kernel density estimation methods are also employed for acceleration. However, existing methods require tremendous computational resources which make current methods for calculating neutron flux highly inconvenient.

**SUMMARY OF THE INVENTION**

In view of the technical problems existing in the prior art, the neutron flux calculation method, device, electronic equipment, and computer-readable storage medium proposed in this application can solve at least one technical problem.

As to a first aspect, the subject application provides a method for calculating neutron flux, characterized by comprising: using a kernel density estimation method and a sampling method to calculate a first objective function; using an inner product of random Fourier feature vectors to obtain a kernel function; based on the first objective function and the kernel function, obtaining a second objective function using an average Fourier feature vector of neutron flux; using a sampling method to calculate the average Fourier feature vector of neutron flux; based on the second objective function and the average Fourier feature vector of neutron flux, calculating a third objective function; based on the average Fourier feature vector of neutron flux, within a spatial subset, calculating the average Fourier feature vector of neutron flux; based on the average Fourier feature vector of neutron flux calculated within the spatial subset and the third objective function, calculating a fourth objective function; wherein the first objective function, the second objective function, the third objective function, and the fourth objective function are all functional expressions used to calculate the neutron flux of a device where nuclear reactions occur.

- As to the second aspect, the subject application provides a method for solving physical field equations which comprises using the aforementioned method to perform at least one of the following: solving neutron transport equations, hydrodynamic equations, heat conduction equations, and engineering integral and differential physical equations.

- As to the second aspect, the subject application provides a first calculation module configured to calculate a first objective function using a kernel density estimation method and a sampling method; a second calculation module configured to obtain a kernel function using an inner product of random Fourier feature vectors; a third calculation module configured to obtain a second objective function based on the first objective function and the kernel function, using an average Fourier feature vector of neutron flux; a fourth calculation module configured to calculate the average Fourier feature vector of neutron flux using a sampling method; a fifth calculation module configured to calculate a third objective function based on the second objective function and the average Fourier feature vector of neutron flux; a sixth calculation module configured to calculate the average Fourier feature vector of neutron flux in a spatial subset based on the average Fourier feature vector of neutron flux; a seventh calculation module configured to calculate a fourth objective function based on the average Fourier feature vector of neutron flux calculated in the spatial subset and the third objective function; wherein the first objective function, the second objective function, the third objective function, and the fourth objective function are functional expressions used to calculate the neutron flux of a device where nuclear reactions occur.

As to the fourth aspect, the subject application provides an electronic device, comprising: a processor and a memory storing computer program instructions; when the electronic device executes the computer program instructions, the method according to any one of the above is implemented.

As to the fifth aspect, the subject application provides a computer-readable storage medium which stores computer program instructions, and when the computer program instructions are executed by a processor, the method according to any one of the above is implemented.

The neutron flux calculation method provided in the subject application uses less computational effort while maintaining similar solution accuracy, reducing the simulation workload in scenarios such as modeling devices where nuclear reactions occur using sampling methods. It enables high-resolution, high-fidelity calculations of neutron flux and other physical quantities in a significantly shorter time, thereby markedly improving the efficiency of data processing related to neutron flux analysis.

## Brief Description of the Drawings

The preferred embodiments of the present application will be further described in detail below with reference to the accompanying drawings, in which:

Fig. 1 is a flowchart of a method for calculating neutron flux according to an embodiment of the present application;
Fig. 2 is a schematic diagram of a simplified geometric and material filling arrangement of a nuclear reactor fuel assembly according to an embodiment of the present application;
Fig. 3 is a neutron flux distribution diagram of a reference solution according to an embodiment of the present application;
Fig. 4 is a neutron flux distribution diagram obtained using Method 1 and 500,000 effective particles according to an embodiment of the present application;
Fig. 5 is a neutron flux distribution diagram obtained using Method 2 and 500,000 effective particles according to an embodiment of the present application;
Fig. 6 is a neutron flux distribution diagram obtained using Method 3 and 500,000 effective particles according to an embodiment of the present application;
Fig. 7 is a schematic structural diagram of a device for calculating neutron flux according to an embodiment of the present application;
Fig. 8 is a schematic diagram of the hardware structure of an electronic device according to an embodiment of the present application.

## Detailed Implementation

The principles and spirit of the present application will be described below with reference to several exemplary implementation modes. It should be understood that the purpose of providing these implementation modes is to make the principles and spirit of the present application clearer and more thorough, enabling those skilled in the art to better understand and further implement the principles and spirit of the present application. The exemplary implementation modes provided herein are only a part of the implementation modes of the present application, rather than all implementation modes. Based on the implementation modes herein, all other implementation modes obtained by those of ordinary skill in the art without making creative efforts shall fall within the protection scope of the present application.

Those skilled in the art will appreciate that the implementation modes of the present application can be implemented as a method, an apparatus, an electronic device, and a storage medium. Therefore, the present disclosure may be specifically implemented in at least one of the following forms: fully hardware, fully software (including firmware, resident software, microcode, etc.), or a form combining hardware and software.

In accordance with the embodiments of the present application, the subject application seeks protection for a method for calculating neutron flux, a device, an electronic equipment, and a storage medium.

In this document, terms such as "first" and "second" are used merely to distinguish one entity (or operation) from another entity (or operation), without requiring or implying any actual sequence or relationship between these entities (or operations). Elements defined by phrases such as "comprising..." (e.g., components, constituents, processes, steps) do not exclude the existence of additional elements beyond those listed. That is, the scope may also include other elements not explicitly enumerated.

In this document, any elements and their quantities in the accompanying drawings are for illustrative purposes only and not intended to be limiting. Any labels in the drawings are used solely for distinction and carry no limiting implications.

The principles and spirit of the present application are elaborated in detail below with reference to several exemplary or representative embodiments.

First, a brief description is provided for concepts, technical terms, and related content that may be involved in the embodiments of the present application.

## I. Sampling Methods

Assume the computation of a function $f(\vec{x})$ in a d-dimensional complex space $\mathbb{C}^d$, where $\vec{x} \in \mathbb{C}^d$ represents a point in this space, and $f(\vec{x})$ is a real-valued function. A sampling method is an approach for estimating the target function $f(\vec{x})$ by designing algorithms and sampling. Two examples of sampling are provided here: low-dimensional geometry sampling and its special case, point sampling. Other sampling methods may also exist.

The Monte Carlo methods belong to the category of sampling methods.

The low-dimensional geometry sampling involves a sampling process that generates a set of N low-dimensional geometries $U_n \subset \mathbb{C}^d$s where n = 1...N, and n is the sampling index. This sampling process also produces a first weight function w($\vec{y}$) in $\mathbb{C}^d$ such that the integral of f($\vec{x}$) over a subset $S \subset \mathbb{C}^d$ can be expressed by the following equation:

$$\int_S f(\vec{x})d\vec{x} \approx \frac{1}{N}\Sigma_{n=1}^N \int_{U_n \cap S} w_n(\vec{y})d\vec{y} \qquad \textcircled{1}$$

Here, a low-dimensional geometry is mathematically defined as a manifold, which is a mapping from a lower-dimensional complex space $\mathbb{C}^{d'}$ to $\mathbb{C}^d$ Specifically, $U_n$ is a subset of the space $\mathbb{C}^d$, i.e. $U_n \subset \mathbb{C}^d$, and there exists a mapping $\mathcal{M}$:$A_n \to U_n$, from a subset $A_n \subset \mathbb{C}^{d'}$ of $\mathbb{C}^{d'}$ to $U_n$. The dimension of this lower-dimensional complex space $\mathbb{C}^{d'}$ satisfies $0 \leq d' \leq d$. Examples of low-dimensional geometries in three-dimensional space include spatial lines, spatial triangles, or spherical surfaces. Since the first weight function $w_n(\vec{y})$ corresponds to the sampling with index n, the first weight functions may be identical or may differ across different samplings.

Moreover, when we treat $U_n$ as a point $\vec{x_n}$ (where d' = 0), the integral $\int_{U_n S} w_n(\vec{y})d\vec{y}$ in Formula $\textcircled{1}$ can be regarded as $w_n(\vec{x_n})$ multiplied by the indicator function of the point $\vec{x_n}$ over the subset S. In this case, Formula $\textcircled{1}$ transforms into Formula $\textcircled{2}$, yielding point sampling. Since the sampling process needs to be redesigned when transitioning from low-dimensional geometry sampling to point sampling, the weight function may differ. The weight function used in point sampling is denoted as the second weight function $\tilde{w}_n(\vec{x_n})$.

Point sampling methods involve a sampling process that generates a set of N points in $\mathbb{C}^d$, $\vec{x_n} \in \mathbb{C}^d$, where n = 1...N, and in this sampling process, there is a second weight function $\tilde{w}_n(\vec{x_n})$ in $\mathbb{C}^d$, such that the integral of f($\vec{x}$) over a subset $S \subset \mathbb{C}^d$ can be expressed by the following formula:

$$\int_S f(\vec{x})d\vec{x} \approx \frac{1}{N}\Sigma_{n=1}^N \tilde{w}_n(\vec{x_n})I_S(\vec{x_n}) \qquad \textcircled{2}$$

wherein, since the second weight function $\tilde{w}_n(\vec{x_n})$ corresponds to the sampling with index n the second weight functions may be identical or may differ across different samplings; $I_S(\vec{x_n})$ is the indicator function of S, where $I_S(\vec{x_n})$ equals 1 if $\vec{x_n}$ is in S and otherwise $I_S(\vec{x_n})$ equals 0, i.e.:

$$I_S(\vec{x_n}) = \begin{cases} 1 & \vec{x_n} \in S \\ 0 & \vec{x_n} \notin S \end{cases} \qquad \textcircled{3}$$

In practice, the sampling process may be random or not entirely random, meaning that the samples may be generated through some deterministic procedure.

## II. Kernel Density Estimation

Formulas $\textcircled{1}$ and $\textcircled{2}$ are used to estimate the integral of f($\vec{x}$) over S. If it is necessary to obtain the value of f($\vec{x}$) at a specific point $\vec{x}$, a method named kernel density estimation can be employed.

For sampling methods utilizing the low-dimensional geometry sampling, f($\vec{x}$) can be estimated using the following formula:

$$f(\vec{x}) \approx \frac{1}{N}\Sigma_{n=1}^N \int_{U_n} K(\vec{x},\vec{y})w_n(\vec{y})d\vec{y} \qquad \textcircled{4}$$

wherein $K(\vec{x},\vec{y})$ is the kernel function.

For sampling methods utilizing the point sampling, a function $K(\vec{x},\vec{y}) \geq 0$ is define and its values are non-negative real numbers with $\vec{x},\vec{y} \in \mathbb{C}^d$, then f($\vec{x}$) can be estimated using the following formula:

$$f(\vec{x}) \approx \frac{1}{N}\sum_{n=1}^{N} K(\vec{x},\vec{x_n})\tilde{w}_n(\vec{x_n}) \qquad (5)$$

wherein $K(\vec{x},\vec{y})$ is the kernel function and $K(\vec{x},\vec{x_n})$ represents the value of the kernel function when $\vec{y} = \vec{x_n}$.

When the value of the kernel function $K(\vec{x},\vec{y})$ depends solely on $\vec{x} - \vec{y}$, that is, there exists a function $K_0(\vec{u})$ such that $K(\vec{x},\vec{y}) = K_0(\vec{x} - \vec{y})$, and $K(\vec{x},\vec{y})$ is translation-invariant, wherein $\vec{u} = \vec{x} - \vec{y}$.

In addition, the function $K_0(\vec{u})$ can be scaled. That is, a reversible matrix H with dimensions d × d in $\mathbb{C}^d \times \mathbb{C}^d$ is defined, and then $K_0(\vec{u})$ can be scaled to $\tilde{K}_0(\vec{u})$ through Formula ⑥ wherein $H^{-1}$ is the inverse matrix of matrix H, and det (H) is the determinant of matrix H. $\tilde{K}_0(\vec{u})$ is usually a more widely used function, and Formula ⑥ provides a method for constructing $K_0(\vec{u})$ from $\tilde{K}_0(\vec{u})$.

$$K_0(\vec{u}) = \frac{1}{\det(H)}\tilde{K}_0(H^{-1}\vec{u}) \qquad (6)$$

As an example, $\tilde{K}_0(\vec{u})$ can be a Gaussian function, as shown in the following formula:

$$\tilde{K}_0(\vec{u}) = (2\pi)^{-d/2}e^{-\|\vec{u}\|^2/2} \qquad (7)$$

wherein, $\|\vec{u}\| = \sqrt{\vec{u}^*\vec{u}}$ is the norm of the vector $\vec{u}$, and $\vec{u}^*$ is the conjugate transpose of $\vec{u}$. Specifically, assuming $\vec{u} = (u_1,u_2,...,u_d)$, wherein $u_1,u_2,...,u_d \in \mathbb{C}$ are complex numbers, and then, $\|\vec{u}\| = \sqrt{\sum_{m=1}^{d} u_m^* u_m}$, wherein $u_m^*$ is the complex conjugate of $u_m$. Formula ⑦ satisfies the normalization condition: $\int_{\mathbb{C}^d} \tilde{K}_0(\vec{u}) \, d\vec{u} = 1$ 。

As an example, $\tilde{K}_0(\vec{u})$ can be the Epanechnikov function, as shown in the following formula:

$$\tilde{K}_0(\vec{u}) = \begin{cases} \frac{d+2}{2\cdot 5^{d/2}}C_d^{-1}\left(1-\frac{1}{5}\|\vec{u}\|^2\right) & \|\vec{u}\|^2 < 5 \\ 0 & \|\vec{u}\|^2 \geq 5 \end{cases} \qquad (8)$$

wherein, $C_d$ is a constant such that $\int_{\mathbb{C}^d} \tilde{K}_0(\vec{u}) \, d\vec{u} = 1$, and for d = 1,2,3, $C_1 = 2, C_2 = \pi, C_3 = 4\pi/3$. Formulas ⑦ and ⑧ are two examples of $\tilde{K}_0(\vec{u})$ and other possibilities may exist.

### III. Random Fourier Features

The kernel density estimation is a classical technique in machine learning and has been widely applied in practice. However, as shown in Formula ④ or Formula ⑤, when the number of samples N is very large (e.g., tens of millions or hundreds of billions), the computational cost of the summation in Formula ④ or Formula ⑤ becomes prohibitively high due to its proportionality to N. To address this issue, a method called Random Fourier Features has been proposed.

First, assume that $K(\vec{x},\vec{y}) = K_0(\vec{x} - \vec{y})$ is translation-invariant and positive definite, according to Bochner's Theorem, there exists a function $p(\vec{\omega}) \geq 0$, where $p(\vec{\omega}) \geq 0$ is a non-negative real-valued function and $\vec{\omega} \in \mathbb{C}^d$, such that $\int_{\mathbb{C}^d} p(\vec{\omega})d\vec{\omega} = 1$, and the following holds:

$$K_0(\vec{x} - \vec{y}) = K_0(\vec{0})\int_{\mathbb{C}^d} p(\vec{\omega})e^{j\vec{\omega}^*(\vec{x}-\vec{y})}d\vec{\omega} \qquad (9)$$

Wherein j is the imaginary unit, and 0 is the zero vector in the space $\mathbb{C}^d$. For the Hilbert space (the zero vector is the difference between $\vec{x}$ and itself, i.e. $\vec{0} = \vec{x} - \vec{x}$). Formula ⑨ represents the Fourier transform between the function $K_0(\vec{u})$ and the function $p(\vec{\omega})$.

Thus, based on the above description of $p(\vec{\omega})$, $p(\vec{\omega})$ can be regarded as a probability distribution function. If the

random variable $\vec{\omega}$ follows the distribution described by $p(\vec{\omega})$) the following formula can be derived:

$$K_0(\vec{x} - \vec{y}) = K_0(\vec{0})E_{\vec{\omega}}(e^{j\vec{\omega}^*(\vec{x}-\vec{y})}) \qquad \text{(10)}$$

wherein, $E_{\vec{\omega}}(e^{j\vec{\omega}^*(\vec{x}-\vec{y})})$ denotes the expectation of the function $e^{j\vec{\omega}^*(\vec{x}-\vec{y})}$ with respect to the random variable $\vec{\omega}$.

Given a set of $\tilde{D}$ samples of $\vec{\omega}$ following $p(\vec{\omega})$, i.e. $\vec{\omega_1},\vec{\omega_2},...,\vec{\omega_{\tilde{D}}}$ according to Formula ⑩, a calculation method for $K_0(\vec{x} - \vec{y})$ is shown in Formula ⑪:

$$K_0(\vec{x} - \vec{y}) \approx K_0(\vec{0})\frac{1}{\tilde{D}}\Sigma_{k=1}^{\tilde{D}} e^{j\vec{\omega_k}^*(\vec{x}-\vec{y})} \qquad \text{(11)}$$

Additionally, since $K_0(\vec{x} - \vec{y})$ is a real number, the real part of Formula ⑪ can be taken using the Re function, resulting in Formula ⑫:

$$K_0(\vec{x} - \vec{y}) \approx K_0(\vec{0})\frac{1}{\tilde{D}}\Sigma_{k=1}^{\tilde{D}} \text{Re}(e^{j\vec{\omega_k}^*(\vec{x}-\vec{y})}) \qquad \text{(12)}$$

When $\vec{\omega_k}$, $\vec{x}$ and $\vec{y}$ are all real-valued vectors, Formula ⑫ can be written as Formula ⑬:

$$K_0(\vec{x} - \vec{y}) \approx K_0(\vec{0})\frac{1}{\tilde{D}}\Sigma_{k=1}^{\tilde{D}} \cos(\vec{\omega_k}^*(\vec{x} - \vec{y})) \qquad \text{(13)}$$

And further, based on trigonometric function operations, Formula ⑬ can be expressed as Formula ⑭:

$$K_0(\vec{x} - \vec{y}) \approx K_0(\vec{0})\frac{1}{\tilde{D}}\Sigma_{k=1}^{\tilde{D}}\left(\cos(\vec{\omega_k}^*\vec{x})\cos(\vec{\omega_k}^*\vec{y}) + \sin(\vec{\omega_k}^*\vec{x})\sin(\vec{\omega_k}^*\vec{y})\right) \qquad \text{(14)}$$

Then, as defined in Formula ⑮, the vector function $\vec{z_1}(\vec{x})$ has a value whose dimensionality is $2\tilde{D}$:

$$\vec{z_1}(\vec{x}) = \frac{1}{\sqrt{\tilde{D}}}\begin{pmatrix} \cos(\vec{\omega_1}^*\vec{x}) \\ \sin(\vec{\omega_1}^*\vec{x}) \\ \cos(\vec{\omega_2}^*\vec{x}) \\ \sin(\vec{\omega_2}^*\vec{x}) \\ \vdots \\ \cos(\vec{\omega_{\tilde{D}}}^*\vec{x}) \\ \sin(\vec{\omega_{\tilde{D}}}^*\vec{x}) \end{pmatrix} \qquad \text{(15)}$$

According to Formula ⑮, Formula ⑭ can be written as Formula ⑯:

$$K_0(\vec{x} - \vec{y}) \approx K_0(\vec{0})\vec{z_1}(\vec{x})^*\vec{z_1}(\vec{y}) \qquad \text{(16)}$$

where $\vec{z_1}(\vec{x})^*$ denotes the conjugate transpose of the vector $\vec{z_1}(\vec{x})$.

Additionally, since $K_0(\vec{x} - \vec{y})$ is a real number, the real part of Formula ⑩ can be taken using the Re function, resulting in Formula ⑰:

$$K_0(\vec{x} - \vec{y}) = K_0(\vec{0})E_{\vec{\omega}}\left(\text{Re}(e^{j\vec{\omega}^*(\vec{x}-\vec{y})})\right) \qquad \text{(17)}$$

When $\vec{\omega_k}$, $\vec{x}$, and $\vec{y}$ are all real-valued vectors, Formula ⑰ can be written as Formula ⑱:

$$K_0(\vec{x} - \vec{y}) = K_0(\vec{0})E_{\vec{\omega}}\left(\cos(\vec{\omega}^*(\vec{x} - \vec{y}))\right) \qquad ⑱$$

Additionally, given that the random variable b is uniformly distributed over $[0,2\pi]$, and then, due to the periodicity of trigonometric functions, for any real-valued vectors $\vec{\omega}$, $\vec{x}$, and $\vec{y}$, the expectation of $\cos(\vec{\omega}^*(\vec{x} + \vec{y}) + 2b)$ with respect to the random variable b is 0, as shown in Formula ⑲:

$$E_b\left(\cos(\vec{\omega}^*(\vec{x} + \vec{y}) + 2b)\right) = \int_0^{2\pi} \cos(\vec{\omega}^*(\vec{x} + \vec{y}) + 2b)\, db = 0 \qquad ⑲$$

Then, based on Formula ⑱ and Formula ⑲, Formula ⑳ is obtained:

$$K_0(\vec{x} - \vec{y}) = K_0(\vec{0})E_{\vec{\omega}}\left(\cos\left(\vec{\omega}^*(\vec{x} - \vec{y})\right) + E_b\left(\cos\left(\vec{\omega}^*(\vec{x} + \vec{y}) + 2b\right)\right)\right) \qquad ⑳$$

Furthermore,

$$K_0(\vec{x} - \vec{y}) = K_0(\vec{0})E_{\vec{\omega}}\left(E_b\left(\cos\left(\vec{\omega}^*(\vec{x} - \vec{y})\right) + \cos\left(\vec{\omega}^*(\vec{x} + \vec{y}) + 2b\right)\right)\right) \qquad \bigcirc,21$$

According to trigonometric identities, Formula $\bigcirc, 22$ is obtained:

$$\cos\left(\vec{\omega}^*(\vec{x} - \vec{y})\right) + \cos\left(\vec{\omega}^*(\vec{x} + \vec{y}) + 2b\right) = \sqrt{2}\cos\left(\vec{\omega}^*\vec{x} + b\right)\sqrt{2}\cos\left(\vec{\omega}^*\vec{y} + b\right)$$

$$\bigcirc, 22$$

According to Formula $\bigcirc, 22$, Formula $\bigcirc, 21$ simplifies to Formula $\bigcirc, 23$:

$$K_0(\vec{x} - \vec{y}) = K_0(\vec{0})E_{\vec{\omega}}\left(E_b\left(\sqrt{2}\cos\left(\vec{\omega}^*\vec{x} + b\right)\sqrt{2}\cos\left(\vec{\omega}^*\vec{y} + b\right)\right)\right) \qquad \bigcirc, 23$$

Given a set of $\tilde{D}$ real numbers $b_1, b_2, \ldots b_{\tilde{D}}$ uniformly distributed over $[0,2\pi]$, another computational method for $K_0(\vec{x} - \vec{y})$ is shown in Formula $\bigcirc, 24$:

$$K_0(\vec{x} - \vec{y}) \approx K_0(\vec{0})\frac{1}{\tilde{D}}\sum_{k=1}^{\tilde{D}} \sqrt{2}\cos\left(\vec{\omega_k}^*\vec{x} + b_k\right)\sqrt{2}\cos\left(\vec{\omega_k}^*\vec{y} + b_k\right) \qquad \bigcirc, 24$$

Then, as defined in Formula $\bigcirc, 25$, the vector function $\vec{z}_2(\vec{x})$ has a dimensionality of $\tilde{D}$:

$$\vec{z}_2(\vec{x}) = \frac{\sqrt{2}}{\sqrt{\tilde{D}}}\begin{pmatrix} \cos(\vec{\omega_1}^*\vec{x} + b_1) \\ \cos(\vec{\omega_2}^*\vec{x} + b_2) \\ \vdots \\ \cos(\vec{\omega_{\tilde{D}}}^*\vec{x} + b_{\tilde{D}}) \end{pmatrix} \qquad \bigcirc, 25$$

Formula $\bigcirc, 24$ can be written as Formula $\bigcirc, 26$:

$$K_0(\vec{x} - \vec{y}) \approx K_0(\vec{0})\vec{z}_2(\vec{x})^*\vec{z}_2(\vec{y}) \qquad \bigcirc, 26$$

where $\vec{z}_2(\vec{x})^*$ denotes the conjugate transpose of the vector $\vec{z}_2(\vec{x})$.
Based on Formula ⑯ and Formula $\bigcirc, 26$, $K_0(\vec{x} - \vec{y})$ can be expressed as the inner product of a set of low-dimensional vectors $\vec{z}(\vec{x})$, as shown in the following equation, where the dimensionality of $\vec{z}(\vec{x})$ is D and typically the dimensionality D is much smaller than N; while for $\vec{z}(\vec{x}) = \sqrt{K_0(\vec{0})}\,\vec{z}_1(\vec{x})$, $D = 2\tilde{D}$ and for

$\vec{z}(\vec{x}) = \sqrt{K_0(\vec{0})}\,\vec{z}_2(\vec{x})$, $D = \tilde{D}$:

$$K(\vec{x},\vec{y}) = K_0(\vec{x} - \vec{y}) \approx \vec{z}(\vec{x})^{*}\vec{z}(\vec{y}) \qquad\qquad \bigcirc,27$$

$\sqrt{K_0(\vec{0})}\,\vec{z}_1(\vec{x})$ and $\sqrt{K_0(\vec{0})}\,\vec{z}_2(\vec{x})$ are two specific instances of the low-dimensional vector $\vec{z}(\vec{x})$.

For $K(\vec{x},\vec{y})$ that are not translation-invariant, existing techniques also have a form analogous to Formula $\bigcirc$, 27, meaning there exist vectors $\vec{z}(\vec{x})$ and $\vec{z}(\vec{y})$ that satisfy Formula $\bigcirc$, 28:

$$K(\vec{x},\vec{y}) \approx \vec{z}(\vec{x})^{*}\vec{z}(\vec{y}) \qquad\qquad \bigcirc,28$$

Therefore, any implementation beyond Formula ⑯ and Formula $\bigcirc$,26 that satisfies Formula $\bigcirc$,28 are also encompassed within the scope of protection of this application.

If Formula $\bigcirc$,28 and Formula ( 8 ) are substituted into Formula ④, Formula (9) can be obtained. Similarly, if Formula $\bigcirc$,28 and Formula (10) are substituted into Formula ⑤, Formula (9) can also be obtained. The computational effort required to calculate $f(\bar{x})$ using Formula (9) is proportional to D, whereas the computational effort to calculate $f(\bar{x})$ using Formula ④ or Formula ⑤ is proportional to N. Typically, the dimensionality D is much smaller than N. Therefore, using the above Fourier feature method can significantly reduce the computational cost of the kernel density estimation method.

The following provides a detailed description of the neutron flux calculation method proposed in the embodiments of this application.

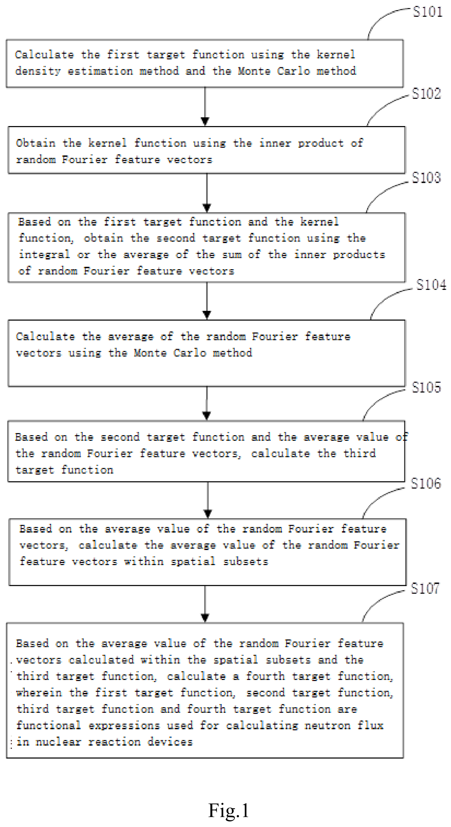

Fig. 1 schematically illustrates a flowchart of a neutron flux calculation method according to an embodiment of this application. The method comprises:

S101: Calculate a first target function using a kernel density estimation method and a sampling method.

S102: Obtain a kernel function using the inner product of random Fourier feature vectors.

S103: Based on the first target function and the kernel function, obtain a second target function using the average Fourier feature vector of the neutron flux.

S104: Calculate the average Fourier feature vector of the neutron flux using a sampling method.

S105: Based on the second target function and the average Fourier feature vector of the neutron flux, calculate a third target function.

S106: Within spatial subsets, based on the average Fourier feature vector of the neutron flux, calculate the average Fourier feature vector of the neutron flux.

S107: Based on the average Fourier feature vector of the neutron flux calculated within the spatial subsets and the third target function, calculate a fourth target function.

Here, the first target function, second target function, third target function, and fourth target function are functional expressions used to calculate the neutron flux of a device undergoing nuclear reactions. Specifically, the neutron flux refers to the neutron flux density, which denotes the number of neutrons passing through a unit area perpendicular to the direction of neutron motion per unit time.

The neutron flux calculation method proposed in this application reduces the computational load of simulation scenarios such as devices undergoing nuclear reactions using sampling methods, thereby enabling high-resolution, high-fidelity calculations of neutron flux and other physical quantities within a shorter time frame.

In some embodiments of this application, calculating the first target function using the kernel density estimation method and the sampling method includes the following steps:

When the sampling unit of the sampling method is a low-dimensional geometric entity, according to Formula (1), the first target function is obtained by taking the average value of the integral of the product of the kernel function and the first weight function over the sampled low-dimensional geometric entities:

$$f(\vec{x}) \approx \frac{1}{N}\sum_{n=1}^{N} \int_{U_n} K(\vec{x},\vec{y}) w_n(\vec{y}) d\vec{y} \qquad (1)$$

wherein, in the d-dimensional complex space $\mathbb{C}^d$, a sampling process is used to sample N low-dimensional geometric entities $U_n$, where n = 1...N, and n is the sampling index and is a positive integer; $w(\vec{x})$ is the first weight function and its domain is $\mathbb{C}^d$ and its range is real numbers. Since $w_n(\vec{y})$ corresponds to the sampling with index n, the first weight functions for different samples may be the same or different. $K(\vec{x},\vec{y})$ is the kernel function and its definition domain is the Cartesian product of $\mathbb{C}^d$ and $\mathbb{C}^d$, i.e., $\vec{x},\vec{y} \in \mathbb{C}^d$ and its range is non-negative real numbers. A low-dimensional geometric entity is mathematically a manifold which is a mapping from a low-dimensional complex space $\mathbb{C}^{d'}$ to $\mathbb{C}^d$, $U_n$ is a subset of the space $\mathbb{C}^d$, i.e., $U_n \subset \mathbb{C}^d$, and there exists a mapping $\mathcal{M}: A_n \to U_n$ from a subset $A_n \subset \mathbb{C}^{d'}$ to $U_n$.

The dimensionality of this low-dimensional complex space $\mathbb{C}^{d'}$ is d', and $0 \le d' \le d$. The examples of low-dimensional geometric entities in three-dimensional space include spatial lines, spatial triangles, or spherical surfaces.

When the sampling unit of the sampling method is a point, according to Formula (2), the first objective function is obtained by taking the average value of the product of the kernel function and the second weight function at the sampled points:

$$f(\vec{x}) \approx \frac{1}{N}\sum_{n=1}^{N} K(\vec{x},\vec{x_n}) \tilde{w}_n(\vec{x_n}) f(\vec{x}) \approx \frac{1}{N}\sum_{n=1}^{N} K(\vec{x},\vec{x_n}) \tilde{w}(\vec{x_n}) \qquad (2)$$

In the d-dimensional complex space $\mathbb{C}^d$, a sampling process is employed to sample N points $\vec{x_n} \in \mathbb{C}^d$, where n = 1...N, and n is the sampling index and is a positive integer. $w(\vec{x})$ is the second weight function and its domain is $\mathbb{C}^d$ and its range is real numbers. Since $\tilde{w}_n(\vec{x_n})$ corresponds to the sampling with index n, the second weight functions for different samples may be identical or different. $K(\vec{x},\vec{y})$ is the kernel function and its domain is the Cartesian product of $\mathbb{C}^d$ and $\mathbb{C}^d$ (i.e., $\vec{x},\vec{y} \in \mathbb{C}^d$), and its range consists of non-negative real numbers.

In some embodiments of this application, the kernel function may be obtained using the inner product of random Fourier feature vectors, including:

According to Formula (3), the random Fourier feature vectors $\vec{z}(\vec{x})$ and $\vec{z}(\vec{y})$ that satisfy Formula (3) is determined:

$$K(\vec{x},\vec{y}) \approx \vec{z}(\vec{x})^* \vec{z}(\vec{y}) K(\vec{x},\vec{y}) \approx \vec{z}(\vec{x})^* \vec{z}(\vec{y}) \qquad (3)$$

where the domain of $\vec{z}(\vec{x})$ and $\vec{z}(\vec{y})$ is $\mathbb{C}^d$ and its range is the D-dimensional complex space $\mathbb{C}^D$, $\vec{z}(\vec{x})^*$ denotes the conjugate transpose of $\vec{z}(\vec{x})$, and $\vec{z}(\vec{x})^*\vec{z}(\vec{y})$ represents the inner product of $\vec{z}(\vec{x})$ and $\vec{z}(\vec{y})$.

In some embodiments of this application, the second objective function is obtained using the average Fourier feature vector of neutron flux includes:

When the sampling unit of the sampling method is a low-dimensional geometric entity, substituting Formula (3) into Formula (1) yields Formula (4):

$$f(\vec{x}) \approx \frac{1}{N}\sum_{n=1}^{N} \int_{U_n} \vec{z}(\vec{x})^* \vec{z}(\vec{y}) w_n(\vec{y}) d\vec{y} f(\vec{x}) \approx \frac{1}{N}\sum_{n=1}^{N} \int_{U_n} \vec{z}(\vec{x})^* \vec{z}(\vec{y}) w(\vec{y}) d\vec{y}$$

$$(4)$$

Moving $\vec{z}(\vec{x})^*$ outside of the summation sign in Formula (4) yields Formula (5) :

$$f(\vec{x}) \approx \vec{z}(\vec{x})^* \frac{1}{N} \Sigma_{n=1}^N \int_{U_n} \vec{z}(\vec{y}) w_n(\vec{y}) d\vec{y} \qquad (5)$$

When the sampling unit of the sampling method is a point, substituting Formula (3) into Formula (2) yields Formula (6):

$$f(\vec{x}) \approx \frac{1}{N} \Sigma_{n=1}^N \vec{z}(\vec{x})^* \vec{z}(\vec{x_n}) \tilde{w}_n(\vec{x_n}) \qquad (6)$$

Moving $\vec{z}(\vec{x})^*$ outside the summation sign in Formula (6) yields Formula (7):

$$f(\vec{x}) \approx \vec{z}(\vec{x})^* \frac{1}{N} \Sigma_{n=1}^N \vec{z}(\vec{x_n}) \tilde{w}_n(\vec{x_n}) \qquad (7)$$

where $\vec{z}(\vec{x})$ is the random Fourier feature vector at $\vec{x}$, $\vec{z}(\vec{y})$ is the random Fourier feature vector at $\vec{y}$, $\vec{z}(\vec{x_n})$ is the random Fourier feature vector at $\vec{x_n}$, $w(\vec{y})$ is the first weight function, and $\tilde{w}(\vec{x_n})$ is the second weight function.

In some embodiments of this application, the average Fourier feature vector of neutron flux is calculated using the sampling method, including:
According to Formula (8), the average Fourier feature vector $\vec{a}$ of neutron flux is obtained by calculating the average value of the integral of the product of the random Fourier feature vector $\bar{z}(\vec{y})$ and the first weight function over the sampled low-dimensional geometric entity $U_n$:

$$\vec{a} = \frac{1}{N} \Sigma_{n=1}^N \int_{U_n} \vec{z}(\vec{y}) w_n(\vec{y}) d\vec{y} \quad \vec{a} = \frac{1}{N} \Sigma_{n=1}^N \int_{U_n} \vec{z}(\vec{y}) w(\vec{y}) d\vec{y} \qquad (8)$$

Substituting Formula (8) into Formula (5) yields Formula (9), which calculates the third objective function based on the second objective function and the average Fourier feature vector of neutron flux:

$$f(\vec{x}) \approx \vec{z}(\vec{x})^* \vec{a} \qquad (9)$$

where $\vec{z}(\vec{x})$ is the random Fourier feature vector at $\vec{x}$, $\vec{z}(\vec{y})$ is the random Fourier feature vector at $\vec{y}$, and $w_n(\vec{y})$ is the first weight function.

In some embodiments of the present application, calculating the average Fourier feature vector of neutron flux using the sampling method further includes:
According to Formula (10), the average Fourier feature vector $\vec{a}$ of neutron flux is obtained by calculating the average value of the product of the random Fourier feature vector at the sampling point $\vec{x_n}$ and the second weight function:

$$\vec{a} = \frac{1}{N} \Sigma_{n=1}^N \vec{z}(\vec{x_n}) \tilde{w}_n(\vec{x_n}) \qquad (10)$$

Substituting Formula (10) into Formula (7) yields Formula (9):

$$f(\vec{x}) \approx \vec{z}(\vec{x})^* \vec{a} \quad f(\vec{x}) \approx \vec{z}(\vec{x})^* \vec{a} \qquad (9)$$

where $\vec{z}(\vec{x})$ is the random Fourier feature vector at $\vec{x}$, $\vec{z}(\vec{x_n})$ is the random Fourier feature vector at the sampling point $\vec{x_n}$, and $\tilde{w}_n(\vec{x_n})$ is the second weight function.

In some embodiments of the present application, calculating the average Fourier feature vector of the neutron flux in spatial subsets based on the average Fourier feature vector of the neutron flux includes:

Using Formula (11), the average Fourier feature vector of the neutron flux in the spatial subset T is obtained by calculating the average value of the integral of the product of the random Fourier feature vector and the first weight function over the portion where the spatial subset T of $\mathbb{C}^d$ intersects with the sampled low-dimensional geometric

entity $U_n$:

$$\overrightarrow{a_T} = \frac{1}{N}\sum_{n=1}^{N} \int_{U_n \cap T} \vec{z}(\vec{y})w_n(\vec{y})d\vec{y} \qquad (11)$$

where $\overrightarrow{a_T}$ is the average Fourier feature vector of the neutron flux calculated in the spatial subset T.

Calculating the fourth objective function based on the average Fourier feature vector of the neutron flux in the spatial subsets and the third objective function:

$$f(\vec{x}) \approx \vec{z}(\vec{x})^* \sum_{m=1}^{M} \overrightarrow{a_{T_m}} \qquad (12)$$

where $T_m$ is a subset of the space $\mathbb{C}^d$, m = 1...M, and m is the subset index, which is a positive integer.
In some embodiments of the present application, calculating the average Fourier feature vector of the neutron flux in spatial subsets based on the average Fourier feature vector of the neutron flux further includes:

Using Formula (13), the average Fourier feature vector of the neutron flux in the spatial subset T is obtained by calculating the average value of the product of the random Fourier feature vector and the second weight function at the sampling points $\overrightarrow{x_n}$ within the subset T of the space $\mathbb{C}^d$:

$$\overrightarrow{a_T} = \frac{1}{N}\sum_{n=1}^{N} \vec{z}(\overrightarrow{x_n})\widetilde{w}_n(\overrightarrow{x_n})I_T(\overrightarrow{x_n}) \qquad (13)$$

where $I_T(\overrightarrow{x_n})$ is the indicator function of T: if $\overrightarrow{x_n}$ is within T, the value of $I_T(\overrightarrow{x_n})$ is 1; otherwise, the value is 0; and $\overrightarrow{a_T}$ is the average Fourier feature vector of the neutron flux calculated in the spatial subset T.

Calculating the fourth objective function based on the average Fourier feature vector of the neutron flux computed in the spatial subsets and the aforementioned third objective function:

$$f(\vec{x}) \approx \vec{z}(\vec{x})^* \sum_{m=1}^{M} \overrightarrow{a_{T_m}} \qquad (12)$$

where $T_m$ is a subset of the space $\mathbb{C}^d$, with m = 1...M, and m is the subset index, which is a positive integer.

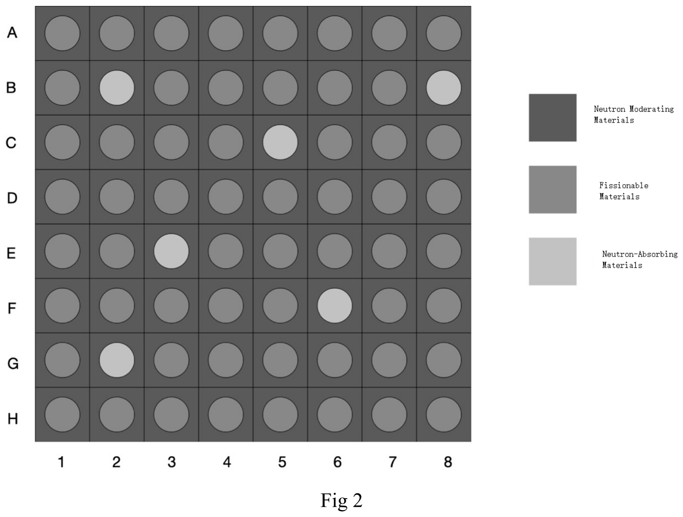

Since $\sum_{m=1}^{M} \overrightarrow{a_{T_m}}$ can be regarded as an approximation of $\vec{a}$, the average Fourier feature vector of the neutron flux calculated in the spatial subsets is based on the average Fourier feature vector of the neutron flux. Consequently, the calculation of the fourth objective function is based on the third objective function.
The neutron flux calculation method proposed in this application is applicable to solving various types of physical equations.
Moreover, by reducing the computational load of simulations involving sampling methods to model scenarios such as nuclear reaction devices, the method enables high-resolution and high-fidelity calculations of neutron flux and other physical quantities within a shorter time frame.
The foregoing embodiments have provided detailed explanations of the specific content of this application. The following section will validate the proposed neutron flux calculation method through concrete examples.
This implementation case involves a simplified quarter-section of a nuclear reactor fuel assembly. The full fuel assembly consists of an 8×8 array, totaling 64 square fuel cells. Each fuel cell has a side length of 1.875 cm, with a circular fuel-filled region at its center having a radius of 0.603 cm. The quarter-section of the fuel assembly is square-shaped with a side length of 15 cm. Figure 2 schematically illustrates the filling pattern of the simplified nuclear reactor fuel assembly in this embodiment. As shown in Figure 2, the circular regions at the center of the cells are filled with either fissionable material (also referred to as fuel) or neutron-absorbing material. Specifically, the circular regions in cells B2, B8, C5, E3, F6, and G2 are filled with neutron-absorbing material, while the circular regions in all other cells are filled with fissionable material. The areas outside the circular regions in the cells are filled with neutron moderating material. The square depicted in Figure 2 lies in the x-y plane and extends infinitely in the z-direction, with material properties remaining identical at all z-positions for the same x and y coordinates. Thus, the problem is effectively two-dimensional.

This simulation is for effective multiplication factor in the neutron transport equation. The neutron reaction cross-sections of the materials are single-group cross-sections, with data provided in Table 1. The problem assumes that neutrons released from fission are isotropic, meaning the probability of neutrons emerging in any direction is equal. Additionally, scattering is elastic, and scattered neutrons are also isotropic, implying that the probability of neutrons appearing in any direction after scattering is uniform.

Table 1. Nuclear Data: One-Group Neutron Reaction Cross-Sections

| Cross Section \ Material Type | Neutron Moderating Material | Fissionable Material | Neutron Absorbing Material |
|---|---|---|---|
| Total Cross Section (1/cm) | 0.3264 | 0.3264 | 0.3264 |
| Absorption Cross Section (1/cm) | 0.09792 | 0.078336 | 0.32176 |
| Scattering Cross Section (1/cm) | 0.22848 | 0.248064 | 0.00464 |
| Fission Cross Section (1/cm) | 0.0 | 0.06528 | 0.0 |
| Number of Neutrons Released per Fission | 0.0 | 2.7 | 0.0 |

The algorithm of the program employs the Monte Carlo method within sampling techniques, utilizing point sampling. This example compares three methods for calculating neutron flux, where Method 1 and Method 2 represent existing techniques, and Method 3 is the approach proposed in this application.

Method 1: The neutron flux at various locations is calculated using the point sampling method as shown in Formula②.

Method 2: The neutron flux at various locations is calculated using the kernel density estimation method as shown in Formula ⑤. The kernel function used is the two-dimensional Panychinnikov function, as defined in Formula ⑧, with d=2. Additionally, the kernel function is scaled using Formula ⑥, where the matrix H has dimensions of $2 \times 2$, and is diagonal, and has both diagonal values set to 0.4859 and off-diagonal values set to 0.

Method 3: Under the same parameter settings as Method 2, Formula (13) is used to calculate the value of $\overrightarrow{a_T}$, followed by using Formula (12) to compute the neutron flux at various locations.

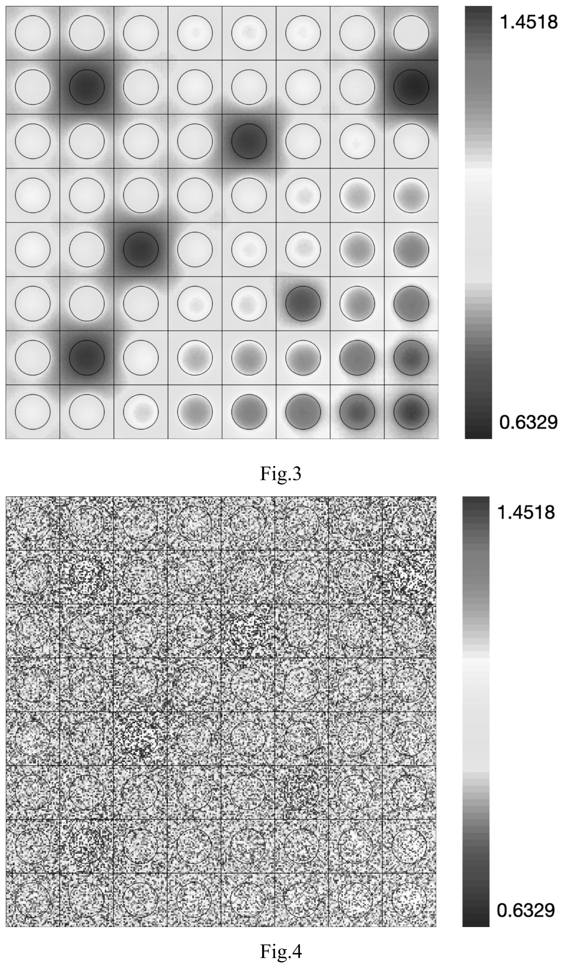

To compare the effectiveness of various methods, a highly accurate reference solution is essential. For this purpose, the traditional Method 1 was employed, simulating 100 billion effective particles to obtain the reference solution. Figure 3 schematically illustrates the neutron flux distribution of the reference solution in this embodiment. As shown in Figure 3, the displayed values are scaled such that the average value across all regions is 1.0.

In the aforementioned reference solution, 100 billion effective particles were used, which would generate computationally infeasible costs under current technical constraints for full-scale nuclear reactor simulations. To align with practical limitations, the comparison of Methods 1, 2, and 3 utilizes only 500,000 effective particles-equivalent to 1/200,000 of the particle count used in the reference solution. Furthermore, to quantitatively compare the differences between the tested methods and the reference solution, the Mean Integrated Squared Error (MISE) is employed for evaluation. If the entire geometric space of the problem is divided into I regions, the MISE between the function fi and $g_i$ corresponding to the region with index i is defined by the following formula:

$$\mathrm{MISE} = \sum_{i=0}^{I-1} \left( \frac{f_i V_i}{\sum_{j=0}^{I-1} f_j V_j} - \frac{g_i V_i}{\sum_{j=0}^{I-1} g_j V_j} \right)^2 \frac{1}{V_i}$$

where i = 0...I - 1, and Vi denotes the spatial size (volume) of region i. In two-dimensional contexts, "spatial size" refers to area. A smaller MISE value indicates better performance.

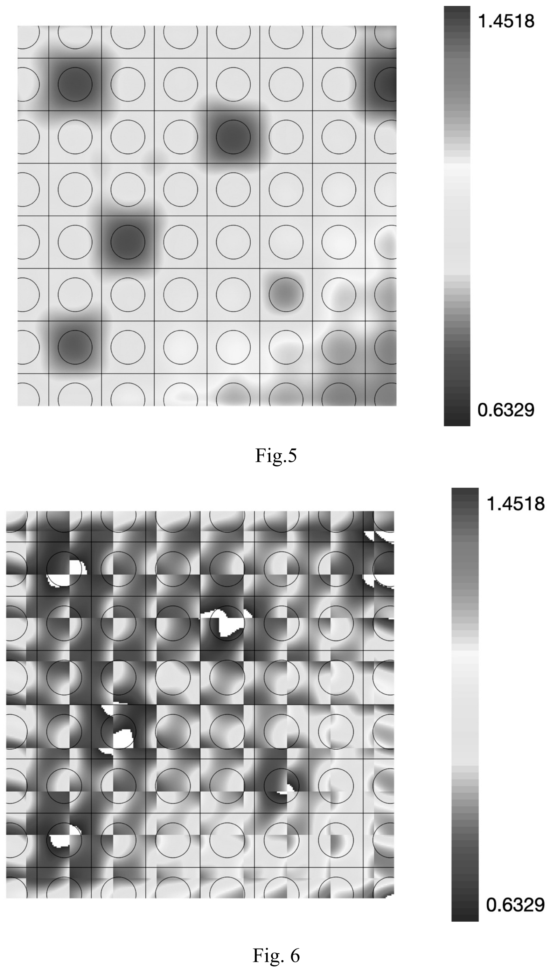

Figure 4 schematically illustrates the neutron flux distribution obtained using Method 1 with 500,000 effective particles in this embodiment of the application. Figure 5 schematically illustrates the neutron flux distribution obtained using Method 2 with 500,000 effective particles in this embodiment of the application. Figure 6 schematically illustrates the neutron flux distribution obtained using Method 3 with 500,000 effective particles in this embodiment of the application.

Table 2 compares the MISE between each method and the reference solution. As shown in Table 2, under the same condition of 500,000 effective particles, the MISE of Method 1 is 6 to 21 times higher than that of Methods 2 and 3. Meanwhile, the MISE of Method 3 is only 1.7% larger than that of Method 2, while its computational time is shorter compared to Method 2.

Table 2: Comparison of Results from Different Methods

| Method | Number of Effective Particles | MISE |
|---|---|---|
| 1(Reference Solution) | 100 billion | 0 |
| 1 | 500,000 | 3.911E-4 |
| 2 | 500,000 | 1.821E-5 |
| 3 | 500,000 | 1.852E-5 |

Although a simplified test case was employed, it encapsulates the key characteristics of nuclear reactor physics. The results demonstrate that the neutron flux calculation method proposed in this application can significantly reduce computational costs while maintaining high accuracy with minimal loss.

This application further proposes a physical field equation solving method, which includes utilizing the aforementioned approach to address at least one of the following: neutron transport equations, fluid dynamics equations, heat conduction equations, as well as the solution of integral and differential physical equations in engineering applications.

That is to say, the neutron flux calculation method proposed in this application can be applied not only to solving neutron flux equations but also to addressing integral and differential physical equations in engineering contexts, such as fluid dynamics equations and heat conduction equations. Consequently, it provides a versatile approach for solving equations governing various physical phenomena in simulation scenarios, including but not limited to nuclear reaction devices.

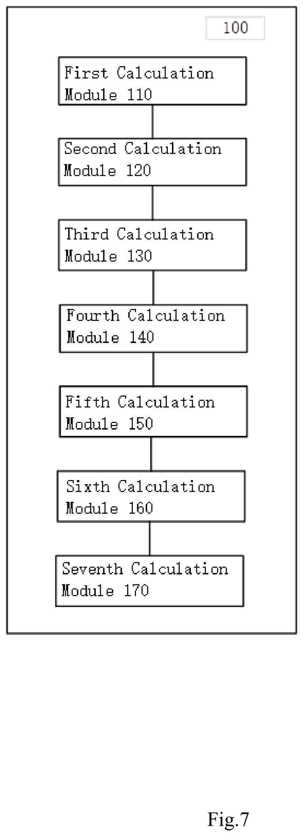

Corresponding to the method provided in this application, an apparatus for calculating neutron flux is also proposed. Figure 7 schematically illustrates the structural diagram of a neutron flux calculation apparatus 100 according to an embodiment of this application.

The calculation apparatus 100 comprises:
First Calculation Module 110 configured to compute the first objective function using kernel density estimation methods and sampling techniques.

Second Calculation Module 120 configured to obtain the kernel function through the inner product of random Fourier feature vectors.

Third Calculation Module 130 configured to derive the second objective function based on the first objective function and the kernel function, utilizing the average Fourier feature vector of neutron flux.

Fourth Calculation Module 140 configured to calculate the average Fourier feature vector of neutron flux using sampling methods.

Fifth Calculation Module 150 configured to compute the third objective function based on the second objective function and the average Fourier feature vector of neutron flux.

Sixth calculation module 160 configured to within spatial subsets, compute the average Fourier feature vector of neutron flux based on the average Fourier feature vector of neutron flux;

Seventh calculation module 170 configured to calculate a fourth objective function based on the average Fourier feature vector of neutron flux computed in the spatial subsets and the third objective function;
wherein, the first objective function, second objective function, third objective function, and fourth objective function are functional expressions used to calculate the neutron flux of nuclear reaction devices.

In some embodiments of the present application, the first calculation module 110 computing the first objective function using kernel density estimation methods and sampling techniques includes:
When the sampling unit of the sampling method is a low-dimensional geometric entity, according to Formula (1), the first objective function is obtained by taking the average value of the integral of the product of the kernel function and the first weight function over the sampled low-dimensional geometric entity:

$$f(\vec{x}) \approx \frac{1}{N}\sum_{n=1}^{N} \int_{U_n} K(\vec{x},\vec{y})w_n(\vec{y})d\vec{y} \qquad （1）$$

In the d-dimensional complex space $\mathbb{C}^d$, a sampling process is used to sample N low-dimensional geometric entities $U_n$ (where n = 1...N, and n is the sampling index and is a positive integer); $w(\vec{x})$ is the first weight function and its domain is $\mathbb{C}^d$ and range is real numbers. Since $w_n(\vec{y})$ corresponds to the sampling with index n, the first weight functions for different samples may be identical or different. $K(\vec{x},\vec{y})$ is the kernel function and its domain is the Cartesian product of

$\mathbb{C}^d$ and $\mathbb{C}^d$ (i.e., $\vec{x}, \vec{y} \in \mathbb{C}^d$, and its range consists of non-negative real numbers. A low-dimensional geometric entity is mathematically a manifold, which is a mapping from a low-dimensional complex space $\mathbb{C}^{d'}$ to $\mathbb{C}^d$, $U_n$ is a subset of the space $\mathbb{C}^d$ ( $U_n \subset \mathbb{C}^d$ ), and there exists a mapping $\mathcal{M}: A_n \rightarrow U_n$ from a subset $A_n \subset \mathbb{C}^{d'}$ to $U_n$. The dimensionality of this low-dimensional complex space $\mathbb{C}^{d'}$ is d', where $0 \le d' \le d$. The examples of low-dimensional geometric entities in three-dimensional space include spatial lines, spatial triangles, or spherical surfaces.

When the sampling unit of the sampling method is a point, the first objective function is obtained according to Formula (2) by taking the average value of the product of the kernel function and the second weight function at the sampled points:

$$f(\vec{x}) \approx \frac{1}{N} \sum_{n=1}^{N} K(\vec{x}, \vec{x_n}) \tilde{w}(\vec{x_n}) \qquad (2)$$

In the d-dimensional complex space $\mathbb{C}^d$, a sampling process is employed to sample $N$ points $\vec{x_n} \in \mathbb{C}^d$, where $n = 1 \ldots N$, and $n$ is the sampling index with a positive integer value. $w(\vec{x})$ is the second weight function and its domain is $\mathbb{C}^d$ and its range is real numbers. Since $w(\vec{x})$ corresponds to the sampling with index n, the second weight functions for different samples may be identical or different. $K(\vec{x}, \vec{y})$ is the kernel function and its domain is the Cartesian product of $\mathbb{C}^d$ and $\mathbb{C}^d$ (i.e., $\vec{x}, \vec{y} \in \mathbb{C}^d$ ), and its range consists of non-negative real numbers.

In some embodiments of the present application, the second calculation module 120 obtains the kernel function through the inner product of random Fourier feature vectors, which includes:

According to Formula (3), it is to determine the random Fourier feature vectors $\vec{z}(\vec{x})$ and $\vec{z}(\vec{y})$ that satisfy Formula (3) :

$$K(\vec{x}, \vec{y}) \approx \vec{z}(\vec{x})^{*} \vec{z}(\vec{y}) \qquad (3)$$

where the domain of $\vec{z}(\vec{x})$ and $\vec{z}(\vec{y})$ is $\mathbb{C}^d$, the range is the D-dimensional complex space $\mathbb{C}^D$, $\vec{z}(\vec{x})^{*}$ denotes the conjugate transpose of $\vec{z}(\vec{x})$, and $\vec{z}(\vec{x})^{*}\vec{z}(\vec{y})$ represents the inner product of $\vec{z}(\vec{x})$ and $\vec{z}(\vec{y})$.

In some embodiments of the present application, the third calculation module 130 obtains the second objective function based on the first objective function and the kernel function by using the average Fourier feature vector of neutron flux, which includes:

When the sampling unit of the sampling method is a low-dimensional geometric entity, substituting Formula (3) into Formula (1) yields Formula (4):

$$f(\vec{x}) \approx \frac{1}{N} \sum_{n=1}^{N} \int_{U_n} \vec{z}(\vec{x})^{*} \vec{z}(\vec{y}) w_n(\vec{y}) d\vec{y} \qquad (4)$$

Moving $\vec{z}(\vec{x})^{*}$ outside the summation sign in Formula (4) yields Formula (5):

$$f(\vec{x}) \approx \vec{z}(\vec{x})^{*} \frac{1}{N} \sum_{n=1}^{N} \int_{U_n} \vec{z}(\vec{y}) w_n(\vec{y}) d\vec{y} \qquad (5)$$

When the sampling unit of the sampling method is a point, substituting Formula (3) into Formula (2) yields Formula (6):

$$f(\vec{x}) \approx \frac{1}{N} \sum_{n=1}^{N} \vec{z}(\vec{x})^{*} \vec{z}(\vec{x_n}) w_n(\vec{x_n}) \qquad (6)$$

Moving $\vec{z}(\vec{x})^{*}$ outside the summation sign in Formula (6) yields Formula (7) :

$$f(\vec{x}) \approx \vec{z}(\vec{x})^{*} \frac{1}{N} \sum_{n=1}^{N} \vec{z}(\overrightarrow{x_n}) \vec{w}_{\mathrm{n}}(\overrightarrow{x_n}) \qquad (7)$$

where $\vec{z}(\vec{x})$ is the random Fourier feature vector at $\vec{x}$, $\vec{z}(\vec{y})$ is the random Fourier feature vector at $\vec{y}$, $\vec{z}(\overrightarrow{x_n})$ is the random Fourier feature vector at $\overrightarrow{x_n}$, $w_n(\vec{y})$ is the first weight function, and $\bar{w}_n(\overrightarrow{x_n})$ is the second weight function.

Optionally, the fourth calculation module 140 calculates the average Fourier feature vector of neutron flux using the sampling method, which includes:

According to Formula (8), the average Fourier feature vector $\vec{a}$ of neutron flux is obtained by calculating the average value of the integral of the product of the random Fourier feature vector $\vec{z}(\vec{y})$ and the first weight function over the sampled low-dimensional geometric entity $U_n$:

$$\vec{a} = \frac{1}{N} \sum_{n=1}^{N} \int_{U_n} \vec{z}(\vec{y}) w_{\mathrm{n}}(\vec{y}) d\vec{y} \quad \vec{a} = \frac{1}{N} \sum_{n=1}^{N} \int_{U_n} \vec{z}(\vec{y}) w(\vec{y}) d\vec{y} \qquad (8)$$

Substituting Formula (8) into Formula (5) yields Formula (9), which calculates the third objective function based on the second objective function and the average Fourier feature vector of neutron flux:

$$f(\vec{x}) \approx \vec{z}(\vec{x})^{*} \vec{a} \qquad (9)$$

where $\vec{z}(\vec{x})$ is the random Fourier feature vector at $\vec{x}$, $\vec{z}(\vec{y})$ is the random Fourier feature vector at $\vec{y}$, and $w_n(\vec{y})$ is the first weight function.

In some embodiments of the present application, the fourth calculation module 140 calculates the average Fourier feature vector of neutron flux using the sampling method, which further includes:

According to Formula (10), the average Fourier feature vector $\overrightarrow{aa}$ of neutron flux is obtained by calculating the average value of the integral of the product of the random Fourier feature vector value at the sampling point $\overrightarrow{x_n}$ and the second weight function:

$$\vec{a} = \frac{1}{N} \sum_{n=1}^{N} \vec{z}(\overrightarrow{x_n}) \vec{w}_{\mathrm{n}}(\overrightarrow{x_n}) \qquad (10)$$

The fifth calculation module 150 computes the third objective function based on the second objective function and the average Fourier feature vector of neutron flux, which includes:

Substituting Formula (10) into Formula (7) yields Formula (9):

$$f(\vec{x}) \approx \vec{z}(\vec{x})^{*} \vec{a} \quad f(\vec{x}) \approx \vec{z}(\vec{x})^{*} \vec{a} \qquad (9)$$

where $\vec{z}(\vec{x})$ is the random Fourier feature vector at $\vec{x}$, $\vec{z}(\overrightarrow{x_n})$ is the random Fourier feature vector at the sampling point $\overrightarrow{x_n}$, and $\bar{w}_n(\overrightarrow{x_n})$ is the second weight function. In some embodiments of the present application, the sixth calculation module 160 calculates the average Fourier feature vector of neutron flux in spatial subsets based on the average Fourier feature vector of neutron flux, which includes:

Using Formula (11), the average Fourier feature vector of neutron flux in the spatial subset $T$ is obtained by calculating the average value of the integral of the product of the random Fourier feature vector and the first weight function over the portion where the spatial subset $T$ of $\mathbb{C}^d$ intersects with the sampled low-dimensional geometric entity $U_n$:

$$\overrightarrow{a_T} = \frac{1}{N} \sum_{n=1}^{N} \int_{U_n \cap T} \vec{z}(\vec{y}) w_{\mathrm{n}}(\vec{y}) d\vec{y} \qquad (11)$$

where $\overrightarrow{a_T}$ is the average Fourier feature vector of the neutron flux calculated in the spatial subset $T$.

The seventh calculation module 170 calculates the fourth objective function based on the average Fourier feature vector of neutron flux computed in the spatial subsets and the third objective function, which includes:

Using Formula (12) to compute the fourth objective function:

$$f(\vec{x}) \approx \vec{z}(\vec{x})^* \sum_{m=1}^{M} \overrightarrow{a_{T_m}} \qquad (12)$$

where $T_m$ is a subset of the space $\mathbb{C}^d$, with $m = 1...M$, and $m$ is the subset index, which is a positive integer.

The seventh calculation module 170 calculates the fourth objective function based on the average Fourier feature vector of neutron flux computed in the spatial subsets and the third objective function further, which includes:

Using Formula (13), the average Fourier feature vector of neutron flux in the spatial subset $T$ is obtained by calculating the average value of the product of the random Fourier feature vector and the second weight function at the sampling points $\overrightarrow{x_n}$ within the subset T of the space $\mathbb{C}^d$:

$$\overrightarrow{a_T} = \frac{1}{N}\sum_{n=1}^{N} \vec{z}(\overrightarrow{x_n}) W_n(\overrightarrow{x_n}) I_T(\overrightarrow{x_n}) \qquad (13)$$

where $I_T(\overrightarrow{x_n})$ is the indicator function of T: if $\overrightarrow{x_n}$ is within T, the value of $I_T(\overrightarrow{x_n})$ is 1; otherwise, the value is 0; and $\overrightarrow{a_T}$ is the average Fourier feature vector of the neutron flux calculated in the spatial subset T.

Calculating the fourth objective function based on the average Fourier feature vector of the neutron flux computed in the spatial subsets and the aforementioned third objective function:

$$f(\vec{x}) \approx \vec{z}(\vec{x})^* \sum_{m=1}^{M} \overrightarrow{a_{T_m}} \qquad (12)$$

where $T_m$ is a subset of the space $\mathbb{C}^d$, with $m = 1...M$, and $m$ is the subset index, which is a positive integer.

Since $\sum_{m=1}^{M} \overrightarrow{a_{T_m}}$ can be regarded as an approximation of $\vec{a}$, the average Fourier feature vector of neutron flux calculated in the spatial subsets is based on the average Fourier feature vector of neutron flux. Consequently, the calculation of the fourth objective function is derived from the third objective function.

The present application further provides an electronic device, comprising: a processor and a memory storing computer program instructions; wherein the processor, when executing the computer program instructions, implements the object data processing method according to any one of the foregoing embodiments.

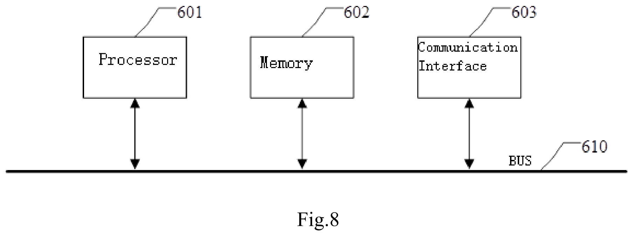

Figure 8 schematically illustrates the hardware architecture diagram of an electronic device according to an embodiment of the present application.

As shown in Figure 8, the electronic device may include a processor 601 and a memory 602 storing computer program instructions.

Specifically, the aforementioned processor 601 may include a Central Processing Unit (CPU), or an Application Specific Integrated Circuit (ASIC), or one or more integrated circuits configured to implement the embodiments of the present application.

The memory 602 may include mass storage for data or instructions. By way of example and not limitation, the memory 602 may comprise a Hard Disk Drive (HDD), a floppy disk drive, flash memory, an optical disc, a magneto-optical disc, magnetic tape, or a Universal Serial Bus (USB) drive, or a combination of two or more of these. Where appropriate, the memory 602 may include removable, non-removable, or fixed media. Where appropriate, the memory 602 may be internal or external to the integrated gateway disaster recovery device. In specific embodiments, the memory 602 is a non-volatile solid-state memory.

The memory may include Read-Only Memory (ROM), Random Access Memory (RAM), magnetic disk storage media devices, optical storage media devices, flash memory devices, electrical, optical, or other physical/tangible memory storage devices. Thus, in general, the memory comprises one or more tangible (non-transitory) computer-readable storage media (e.g., memory devices) encoded with software including computer-executable instructions. When executed (e.g., by one or more processors), the software is operable to perform the operations described with reference to the methods according to aspects of the present disclosure.

The processor 601 reads and executes the computer program instructions stored in the memory 602 to implement any one of the neutron flux calculation methods described in the foregoing embodiments.

In one example, the electronic device may further include a communication interface 603 and a bus 610. As shown in Figure 8, the processor 601, memory 602, and communication interface 603 are connected via the bus 610 to facilitate mutual communication. The electronic device in this embodiment of the application may be a server, another computing device, or a cloud server.

The communication interface 603 is primarily configured to enable communication between modules, apparatuses, units, and/or devices in the embodiments of the present application.

The bus 610 comprises hardware, software, or both, and couples the components of the online data traffic billing device to each other. By way of example and not limitation, the bus may include an Accelerated Graphics Port (AGP) or other graphics bus, an Enhanced Industry Standard Architecture (EISA) bus, a Front Side Bus (FSB), a Hyper Transport (HT) interconnect, an Industry Standard Architecture (ISA) bus, an InfiniBand interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local (VLB) bus, an Infinity Fabric bus, a Cache Coherent Interconnect for Accelerators (CCIX) bus, or any other suitable bus, or a combination of two or more of the above. Where appropriate, the bus 610 may include one or more buses. Although specific buses are described and illustrated in the embodiments of this application, the application contemplates any suitable bus or interconnect.

Furthermore, in conjunction with the neutron flux calculation method described in the above embodiments, the embodiments of the present application may provide a computer storage medium for implementation. The computer storage medium stores computer program instructions, which, when executed by a processor, implement any one of the neutron flux calculation methods described in the foregoing embodiments.

It should be explicitly clarified that the present application is not limited to the specific configurations and processes described above and illustrated in the diagrams. For the sake of brevity, detailed descriptions of known methods are omitted herein. In the aforementioned embodiments, several specific steps are described and illustrated as examples. However, the methodological processes of the present application are not restricted to the specific steps described and illustrated. Those skilled in the art may make various changes, modifications, and additions, or alter the sequence of steps, upon comprehending the spirit of the present application.

The functional blocks shown in the structural diagrams above may be implemented as hardware, software, firmware, or a combination thereof. When implemented in hardware, they may, for example, take the form of electronic circuits, application-specific integrated circuits (ASICs), appropriate firmware, plug-ins, function cards, and so forth. When implemented in software, the elements of the present application are programs or code segments used to perform the required tasks. Programs or code segments may be stored in a machine-readable medium or transmitted via data signals carried in a carrier wave over a transmission medium or communication link. The term "machine-readable medium" may include any medium capable of storing or transmitting information. A machine-readable medium may include non-transitory computer-readable storage media, such as electronic circuits, semiconductor memory devices, ROM, flash memory, erasable ROM (EROM), floppy disks, CD-ROMs, optical discs, hard disks, fiber optic media, etc. Additionally, machine-readable media may include radio frequency (RF) links and similar means. Code segments may be downloaded via computer networks such as the Internet, intranets, and others.

It should also be noted that the exemplary embodiments mentioned in this application describe certain methods or systems based on a series of steps or apparatuses. However, the application is not limited to the sequence of steps described above. That is, the steps may be executed in the order mentioned in the embodiments, in an order different from that in the embodiments, or several steps may be executed simultaneously.

The aspects of the present disclosure are described above with reference to flowcharts and/or block diagrams of methods, apparatuses (systems), and computer program products according to embodiments of the present disclosure. It should be understood that each block in the flowcharts and/or block diagrams, as well as combinations of blocks in the flowcharts and/or block diagrams, may be implemented by computer program instructions. These computer program instructions may be provided to a processor of a general-purpose computer, a special-purpose computer, or other programmable data processing apparatus to produce a machine, such that the instructions, when executed by the processor of the computer or other programmable data processing apparatus, enable the implementation of the functions/actions specified in one or more blocks of the flowcharts and/or block diagrams. Such a processor may include, but is not limited to, a general-purpose processor, a special-purpose processor, an application-specific processor, or a field-programmable logic circuit. It should also be understood that each block in the block diagrams and/or flowcharts, as well as combinations of blocks in the block diagrams and/or flowcharts, may be implemented by dedicated hardware that executes the specified functions or actions, or by a combination of dedicated hardware and computer instructions.

The foregoing descriptions are merely specific implementations of the present application. Those skilled in the art may clearly understand that, for the convenience and brevity of description, the specific working processes of the systems, modules, and units described above may refer to the corresponding processes in the foregoing method embodiments and are not repeated here. It should be understood that the scope of protection of the present application is not limited thereto. Any person skilled in the art may easily conceive various equivalent modifications or substitutions within the technical scope disclosed in the present application, and such modifications or substitutions shall fall within the protection scope of the present application.

**Claims**

1. A method for calculating neutron flux, **characterized by** comprising:

   using a kernel density estimation method and a sampling method to calculate a first objective function;
   using an inner product of random Fourier feature vectors to obtain a kernel function;
   based on the first objective function and the kernel function, obtaining a second objective function using an average Fourier feature vector of neutron flux;
   using a sampling method to calculate the average Fourier feature vector of neutron flux
   based on the second objective function and the average Fourier feature vector of neutron flux, calculating a third objective function;
   based on the average Fourier feature vector of neutron flux, within a spatial subset, calculating the average Fourier feature vector of neutron flux;
   based on the average Fourier feature vector of neutron flux calculated within the spatial subset and the third objective function, calculating a fourth objective function;
   wherein the first objective function, the second objective function, the third objective function, and the fourth objective function are all functional expressions used to calculate the neutron flux of a device where nuclear reactions occur.

2. The method according to claim 1, **characterized in that** said using a kernel density estimation method and a sampling method to calculate a first objective function comprises:
   when the sampling unit of the sampling method is a low-dimensional geometry, obtaining the first objective function, according to formula (1), using the average value of the integral of the product of the kernel function on the sampled low-dimensional geometry and a first weight function:

$$f(\vec{x}) \approx \frac{1}{N}\sum_{n=1}^{N} \int_{U_n} K(\vec{x},\vec{y})w_n(\vec{y})d\vec{y} \qquad (1)$$

   wherein, in a d-dimensional complex space $\mathbb{C}^d$, using a sampling process, N low-dimensional geometries $U_n$ are sampled in the space, where n = 1...N, and n is the sampling index and its value is a positive integer; $w_n(\vec{x})$ is a first weight function, its domain is $\mathbb{C}^d$ and its range is real numbers; and $w_n(\vec{y})$ corresponds to the sampling with index n; $K(\vec{x},\vec{y})$ is a kernel function and its domain is the Cartesian product of $\mathbb{C}^d$ and $\mathbb{C}^d$, i.e. $\vec{x},\vec{y} \in \mathbb{C}^d$, and its range is non-negative real numbers; said low-dimensional geometry is mathematically a manifold, which is a mapping from a low-dimensional complex space $\mathbb{C}^{d'}$ to $\mathbb{C}^d$, $U_n$ is a subset of the space $\mathbb{C}^d$, i.e. $U_n \subset \mathbb{C}^d$, and there exists a mapping $\mathcal{M}:A_n{\rightarrow}U_n$ from a subset $A_n \subset \mathbb{C}^{d'}$ of $\mathbb{C}^{d'}$ to $U_n$, and the dimension of said low-dimensional complex space $\mathbb{C}^{d'}$ is d', where $0 \leq d' \leq d$;
   when the sampling unit of the sampling method is a point, the first objective function is obtained, according to formula (2), using the average value of the product of the kernel function at the sampled points and a second weight function:

$$f(\vec{x}) \approx \frac{1}{N}\sum_{n=1}^{N} K(\vec{x},\vec{x_n})w_n(\vec{x_n})f(\vec{x}) \approx \frac{1}{N}\sum_{n=1}^{N} K(\vec{x},\vec{x_n})\tilde{w}(\vec{x_n})$$

$$(2)$$

   wherein, in a d-dimensional complex space $\mathbb{C}^d$, using a sampling process, N points $\vec{x_n} \in \mathbb{C}^d$ are sampled in the space, where n = 1...N, and n is the sampling index and its value is a positive integer; $w(\vec{x})$ is a second weight function, its domain is $\mathbb{C}^d$, and its range is real numbers; $K(\vec{x},\vec{y})$ is a kernel function and its domain is the Cartesian product of $\mathbb{C}^d$ and $\mathbb{C}^d$, i.e. $\vec{x},\vec{y} \in \mathbb{C}^d$, and its range is non-negative real numbers.

3. The method according to claim 1, **characterized in that** said using an inner product of random Fourier feature vectors to obtain the kernel function comprises:

determining random Fourier feature vectors $\vec{z}(\vec{x})$ and $\vec{z}(\vec{y})$ which satisfy formula (3) according to formula (3):

$$K(\vec{x},\vec{y}) \approx \vec{z}(\vec{x})^{*}\vec{z}(\vec{y}) K(\vec{x},\vec{y}) \approx \vec{z}(\vec{x})^{*}\vec{z}(\vec{y}) \qquad (3)$$

wherein, the domain of $\vec{z}(\vec{x})$ and $\vec{z}(\vec{y})$ is $\mathbb{C}^{d}$, and the range is a D-dimensional complex space $\mathbb{C}^{D}$, $\vec{z}(\vec{x})^{*}$ denotes the conjugate transpose of $\vec{z}(\vec{x})$, and $\vec{z}(\vec{x})^{*}\vec{z}(\vec{y})$ represents the inner product of $\vec{z}(\vec{x})$ and $\vec{z}(\vec{y})$.

4. The method according to claim 2, **characterized in that** said obtaining a second objective function using the average Fourier feature vector of neutron flux comprises:

when the sampling unit of the sampling method is a low-dimensional geometry, substituting formula (3) into formula (1) to obtain formula (4):

$$f(\vec{x}) \approx \frac{1}{N}\Sigma_{n=1}^{N} \int_{U_{n}} \vec{z}(\vec{x})^{*}\vec{z}(\vec{y})w_{n}(\vec{y})d\vec{y} f(\vec{x}) \approx \frac{1}{N}\Sigma_{n=1}^{N} \int_{U_{n}} \vec{z}(\vec{x})^{*}\vec{z}(\vec{y})w(\vec{y})d\vec{y}$$

$$(4)$$

moving $\vec{z}(\vec{x})^{*}$ outside the summation in formula (4) yields formula (5):

$$f(\vec{x}) \approx \vec{z}(\vec{x})^{*}\frac{1}{N}\Sigma_{n=1}^{N} \int_{U_{n}} \vec{z}(\vec{y})w_{n}(\vec{y})d\vec{y} \qquad (5)$$

when the sampling unit of the sampling method is a point, substituting formula (3) into formula (2) yields formula (6):

$$f(\vec{x}) \approx \frac{1}{N}\Sigma_{n=1}^{N} \vec{z}(\vec{x})^{*}\vec{z}(\vec{x_{n}})w_{n}(\vec{x_{n}}) \qquad (6)$$

moving $\vec{z}(\vec{x})^{*}$ outside the summation in formula (6) yields formula (7):

$$f(\vec{x}) \approx \vec{z}(\vec{x})^{*}\frac{1}{N}\Sigma_{n=1}^{N} \vec{z}(\vec{x_{n}})w_{n}(\vec{x_{n}}) \qquad (7)$$

wherein, $\vec{z}(\vec{x})$ is the random Fourier feature vector at $\vec{x}$, $\vec{z}(\vec{y})$ is the random Fourier feature vector at $\vec{y}$, and $\vec{z}(\vec{x_{n}})$ is the random Fourier feature vector at $\vec{x_{n}}$.

5. The method according to claim 4, **characterized in that** said calculating the average Fourier feature vector of neutron flux using a sampling method comprises:

calculating the average value of the integral of the product of the random Fourier feature vector $\vec{z}(\vec{y})$ on the sampled low-dimensional geometry $U_{n}$ and the first weight function according to formula (8) to obtain the average Fourier feature vector $\vec{a}$ of the neutron flux:

$$\vec{a} = \frac{1}{N}\Sigma_{n=1}^{N} \int_{U_{n}} \vec{z}(\vec{y})w_{n}(\vec{y})d\vec{y} \quad \vec{a} = \frac{1}{N}\Sigma_{n=1}^{N} \int_{U_{n}} \vec{z}(\vec{y})w(\vec{y})d\vec{y} \qquad (8)$$

substituting formula (8) into formula (5) yields formula (9), which calculates the third objective function based on the second objective function and the average Fourier feature vector of the neutron flux:

$$f(\vec{x}) \approx \vec{z}(\vec{x})^{*}\vec{a} \qquad (9)$$

wherein, $\vec{z}(\vec{x})$ is the random Fourier feature vector at $\vec{x}$, $\vec{z}(\vec{y})$ is the random Fourier feature vector at $\vec{y}$, and $w_n(\vec{y})$ is the first weight function.

6.  The method according to claim 4, **characterized in that** said calculating the average Fourier feature vector of neutron flux using a sampling method further comprises:

according to formula (10), the average Fourier feature vector $\vec{a}$ of the neutron flux is obtained by calculating the average value of the product of the random Fourier feature vector at the sampled point $\vec{x_n}$ and the second weight function:

$$\vec{a} = \frac{1}{N}\Sigma_{n=1}^{N}\, \vec{z}(\vec{x_n})\vec{w}_n(\vec{x_n}) \qquad (10)$$

substituting formula (10) into formula (7) yields formula (9):

$$f(\vec{x}) \approx \vec{z}(\vec{x})^{*}\vec{a} \;\; f(\vec{x}) \approx \vec{z}(\vec{x})^{*}\vec{a} \qquad (9)$$

wherein $\vec{z}(\vec{x_n})$ is the random Fourier feature vector at the sampling point $\vec{x_n}$.

7.  The method according to claim 5 or 6, **characterized in that** said calculating the average Fourier feature vector of the neutron flux in a spatial subset based on the average Fourier feature vector of the neutron flux comprises:

calculating the average value of the integral of the product of the random Fourier feature vector and the first weight function over the portion where the subset T of the space $\mathbb{C}^d$ intersects with the sampled low-dimensional geometry $U_n$ using formula (11), to obtain the average Fourier feature vector of the neutron flux computed in the spatial subset T:

$$\vec{a_T} = \frac{1}{N}\Sigma_{n=1}^{N} \int_{U_n \cap T} \vec{z}(\vec{y})w_n(\vec{y})d\vec{y} \qquad (11)$$

wherein, $\vec{a_T}$ is the average Fourier feature vector of the neutron flux calculated in the spatial subset T; calculating a fourth objective function based on the average Fourier feature vector of the neutron flux computed in the spatial subset and the third objective function:

$$f(\vec{x}) \approx \vec{z}(\vec{x})^{*}\Sigma_{m=1}^{M}\, \vec{a_{T_m}} \qquad (12)$$

wherein, $T_m$ is a subset of the space $\mathbb{C}^d$, where m = 1...M, and m is the index of the subset and its value is a positive integer.

8.  The method according to claim 5 or 6, **characterized in that** said calculating the average Fourier feature vector of the neutron flux in a spatial subset based on the average Fourier feature vector of the neutron flux further comprises:

using formula (13) to calculate the average value of the product of the random Fourier feature vector and the second weight function at the sampled points $\vec{x_n}$ within the subset T of the space $\mathbb{C}^d$ thereby obtaining the average Fourier feature vector of the neutron flux computed in the spatial subset T:

$$\vec{a_T} = \frac{1}{N}\Sigma_{n=1}^{N}\, \vec{z}(\vec{x_n})\vec{w}_n(\vec{x_n})I_T(\vec{x_n}) \qquad (13)$$

wherein, $I_T(\vec{x_n})$ is the indicator function of T, if $\vec{x_n}$ belongs to T, the value of $I_T(\vec{x_n})$ is 1, otherwise the value of $I_T(\vec{x_n})$ is 0; $\vec{a_T}$ is the average Fourier feature vector of the neutron flux calculated in the spatial subset T; calculating a fourth objective function based on the average Fourier feature vector of the neutron flux computed in the spatial subset and the third objective function:

$$f(\vec{x}) \approx \vec{z}(\vec{x})^* \sum_{m=1}^{M} \overrightarrow{a_{T_m}} \qquad (12)$$

wherein, $T_m$ is a subset of the space ($C^d$, where m = 1...M, and m is the index of the subset and its value is a positive integer.

9. A method for solving physical field equations, **characterized in that** said method for solving physical field equations comprises using the method according to any one of claims 1-8 to perform at least one of the following: solving neutron transport equations, hydrodynamic equations, heat conduction equations, and engineering integral and differential physical equations.

10. A device for calculating neutron flux, **characterized by** comprising:

a first calculation module configured to calculate a first objective function using a kernel density estimation method and a sampling method;
a second calculation module configured to obtain a kernel function using an inner product of random Fourier feature vectors;
a third calculation module configured to obtain a second objective function based on the first objective function and the kernel function, using an average Fourier feature vector of neutron flux;
a fourth calculation module configured to calculate the average Fourier feature vector of neutron flux using a sampling method;
a fifth calculation module configured to calculate a third objective function based on the second objective function and the average Fourier feature vector of neutron flux;
a sixth calculation module configured to calculate the average Fourier feature vector of neutron flux in a spatial subset based on the average Fourier feature vector of neutron flux;
a seventh calculation module configured to calculate a fourth objective function based on the average Fourier feature vector of neutron flux calculated in the spatial subset and the third objective function;
wherein the first objective function, the second objective function, the third objective function, and the fourth objective function are functional expressions used to calculate the neutron flux of a device where nuclear reactions occur.

11. An electronic device, **characterized in that** the electronic device comprises: a processor and a memory storing computer program instructions; when the electronic device executes the computer program instructions, the method according to any one of claims 1-8 is implemented.

12. A computer-readable storage medium, **characterized in that** the storage medium stores computer program instructions, and when the computer program instructions are executed by a processor, the method according to any one of claims 1-8 is implemented.

```
                                                          ┌─ S101
┌──────────────────────────────────────────────┐
│ Calculate the first target function using the  │
│ kernel density estimation method and the Monte │
│ Carlo method                                   │
└──────────────────────────────────────────────┘
                    │
                    ▼                             ┌─ S102
┌──────────────────────────────────────────────┐
│ Obtain the kernel function using the inner     │
│ product of random Fourier feature vectors      │
└──────────────────────────────────────────────┘
                    │
                    ▼                             ┌─ S103
┌──────────────────────────────────────────────┐
│ Based on the first target function and the     │
│ kernel function, obtain the second target      │
│ function using the integral or the average of  │
│ the sum of the inner products of random        │
│ Fourier feature vectors                        │
└──────────────────────────────────────────────┘
                    │
                    ▼                             ┌─ S104
┌──────────────────────────────────────────────┐
│ Calculate the average of the random Fourier    │
│ feature vectors using the Monte Carlo method   │
└──────────────────────────────────────────────┘
                    │
                    ▼                             ┌─ S105
┌──────────────────────────────────────────────┐
│ Based on the second target function and the    │
│ average value of the random Fourier feature    │
│ vectors, calculate the third target function   │
└──────────────────────────────────────────────┘
                    │
                    ▼                             ┌─ S106
┌──────────────────────────────────────────────┐
│ Based on the average value of the random       │
│ Fourier feature vectors, calculate the average │
│ value of the random Fourier feature vectors    │
│ within spatial subsets                         │
└──────────────────────────────────────────────┘
                    │
                    ▼                             ┌─ S107
┌──────────────────────────────────────────────┐
│ Based on the average value of the random       │
│ Fourier feature vectors calculated within the  │
│ spatial subsets and the third target function, │
│ calculate a fourth target function, wherein    │
│ the first target function, second target       │
│ function, third target function and fourth     │
│ target function are functional expressions     │
│ used for calculating neutron flux in nuclear   │
│ reaction devices                               │
└──────────────────────────────────────────────┘
```

Fig.1

Fig 2

Fig.3

Fig.4

Fig.5

Fig. 6

100

First Calculation
Module 110

Second Calculation
Module 120

Third Calculation
Module 130

Fourth Calculation
Module 140

Fifth Calculation
Module 150

Sixth Calculation
Module 160

Seventh Calculation
Module 170

Fig.7

601 602 603

| Processor | Memory | Communication Interface |

BUS 610

Fig.8

## INTERNATIONAL SEARCH REPORT

| International application No. |
| --- |
| **PCT/CN2023/082262** |

| A. | CLASSIFICATION OF SUBJECT MATTER |
| --- | --- |

G06F17/14(2006.01)i;  G06F17/11(2006.01)i;  G21C17/104(2006.01)i

According to International Patent Classification (IPC) or to both national classification and IPC

| B. | FIELDS SEARCHED |
| --- | --- |

Minimum documentation searched (classification system followed by classification symbols)

IPC: G06F G21C

Documentation searched other than minimum documentation to the extent that such documents are included in the fields searched

Electronic data base consulted during the international search (name of data base and, where practicable, search terms used)

CNKI, DWPI, IEEE, CNTXT, USTXT, VEN: 中子通量, 核函数, 核密度, 傅里叶, 内积, 目标函数, 特征向量, 核反应, neutron flux, kernal function, nuclear function, nuclear density, fourier, inner product, objective function, feature vector, nuclear reaction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114783637 A (XI'AN JIAOTONG UNIVERSITY) 22 July 2022 (2022-07-22) claim 1 | 1-12 |
| A | CN 107122331 A (XI'AN JIAOTONG UNIVERSITY) 01 September 2017 (2017-09-01) entire document | 1-12 |
| A | CN 115390127 A (NORTHWEST INSTITUTE OF NUCLEAR TECHNOLOGY) 25 November 2022 (2022-11-25) entire document | 1-12 |
| A | CN 107092784 A (XI'AN JIAOTONG UNIVERSITY) 25 August 2017 (2017-08-25) entire document | 1-12 |
| A | US 2022285040 A1 (WESTINGHOUSE ELECTRIC COMPANY LLC) 08 September 2022 (2022-09-08) entire document | 1-12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 June 2023** | **23 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/082262**

| Patent document cited in search report | | | Publication date (day/month/year) | Patent family member(s) | | | Publication date (day/month/year) |
|---|---|---|---|---|---|---|---|
| CN | 114783637 | A | 22 July 2022 | None | | | |
| CN | 107122331 | A | 01 September 2017 | None | | | |
| CN | 115390127 | A | 25 November 2022 | None | | | |
| CN | 107092784 | A | 25 August 2017 | None | | | |
| US | 2022285040 | A1 | 08 September 2022 | WO | 2022187817 | A1 | 09 September 2022 |

Form PCT/ISA/210 (patent family annex) (July 2022)